# EUROPEAN PATENT APPLICATION

(11) **EP 1 328 123 A1**
(43) Date of publication of application: **16.07.2003**
(21) Application number: 02755869.1
(22) Date of filing: 07.08.2002
(51) Int. Cl.: H04N 7/24

(54) **IMAGE ENCODING APPARATUS AND IMAGE ENCODING METHOD**

(30) Priority: 08.08.2001 JP 2001241283
(71) Applicant: Matsushita Electric Industrial Co., Ltd., Kadoma-shi, Osaka 571-8501 (JP)
(72) Inventor: IMURA, Koji, Machida-shi, Tokyo 194-0013 (JP); KADONO, Shinya, Nishinomiya-shi, Hyogo 663-8113 (JP)
(74) Representative: Grünecker, Kinkeldey, Stockmair & Schwanhäusser Anwaltssozietät
(86) International application number: JP0208047
(87) International publication number: WO03015415

(57) **Abstract**

An image coding apparatus that can prevent the occurrence of pseudo-synchronization on the transmitting side, and can restore an image on the receiving side as intended by the transmitting side. In this image coding apparatus, a synchronization word inclusion possibility detection section (212) determines whether or not it is possible that a quantized DCT coefficient may form a bit string constituting a synchronization word, and if such a possibility is detected, outputs a control signal to an image information modifying section (213). On receiving this control signal, the image information modifying section (213) modifies image information (the quantized DCT coefficient). The modified image information is output to a variable-length coding section (208), and is also output to a dequantization section (209). If the possibility of inclusion of a synchronization word is not detected, the quantized DCT coefficient is output to the variable-length coding section (208), and is also output to the dequantization section (209).

## Description

### Technical Field

The present invention relates to an image coding apparatus and image coding method, and more particularly to an image coding apparatus and image coding method that suppress the occurrence of pseudo-synchronization with a synchronization word that identifies a transmission unit.

### Background Art

Image coding technology is a technology that reduces the amount of data while minimizing degradation of the original image by using image temporal and spatial redundancy and statistical redundancy. Examples of such technology include the MPEG (Moving Picture Experts Group)-2 general-purpose compression technology standardized by the International Organization for Standardization and International Electrotechnical Commission (ISO/IEC), and teleconferencing-oriented H.263 standardized by the International Telecommunication Union-Telecommunication Standardization Sector (ITU-T).

Image coding technology will now be described. Image coding is implemented by means of three constituent technologies: "motion compensation predictive coding", "discrete cosine transform", and "variable-length coding".

In motion compensation prediction coding, an input image picture and pre-coding picture are compared, and the amount of motion between them is predicted (motion detection is performed). The input image picture is predicted from this amount of motion and the pre-coding picture. Thedifferencebetweenthispredictedimageand the input image picture (predicted error signal) is calculated, and image information comprising a small amount of data is transmitted to the receiving side by transmitting this predicted error signal and the aforementioned amount of motion.

Also, separately from this motion compensation predictive coding, there is an intra-coding method that does not code the difference from a pre-coding picture, but codes the image data itself. With this method, the generated amount of code increases but a predicted error is not used, and it is therefore widely used to reset computational error or to recover from degradation of image quality in the event of transmission errors.

Discrete cosine transform is processing that converts an aforementioned predicted error signal to a frequency domain. A characteristic is that, when a predicted error signal is converted to a frequency domain, power is concentrated in a specific frequency domain (low frequency domain). Exploiting this characteristic, this method is combined with the method described next to enable image information to be transmitted using an even smaller amount of data.

With the variable-length coding method, if there is bias in the frequency of appearance of data to be coded, that bias is made use of, and the average code length is shortened by using a short code length to represent events of high frequency of appearance, and using a long code length to represent events of low frequency of appearance. Use of this method enables image information to be transmitted using a small amount of data. Image information actually transmitted to the receiving side comprises a discrete-cosine-converted DCT coefficient, the amount of motion, and the coding mode (motion compensation prediction mode, intra mode, etc.), and a variable-length table is set up for each type. That is to say, when the type and value of image data to be coded are given, a bit string of the desired variable-length code can be obtained, and that bit string is transmitted.

These three constituent technologies are not applied to an entire image picture, but are applied on a unit-by-unit basis to units resulting from dividing a picture into 16×16-pixel coding blocks (macro blocks) . Switching can also be performed in macro block units for the above-described motion compensation predictive coding method and intra-coding method.

Meanwhile, with the rapid advances in radio mobile communications in recent years, the spotlight has now fallen on image communication via portable terminals. Radio communication requires techniques to improve tolerance to errors since transmission error rates are higher than in cable networks. ISO/ICE has implemented standardization of MPEG-4, a compression technology that improves tolerance to transmission errors. In addition, a technology called video packet technology is available as a basic technology for improving tolerance to errors. With this technology, an arbitrary plurality of macro blocks is taken as one transmission unit, a specific synchronization word and header information are coded at the beginning, and the resulting unit is called a video packet.

By configuring video packets, in the event of an error in a coded bit string, the video packet containing the error cannot be decoded but decoding is possible from the next video packet onward, enabling degradation of image quality to be limited to the extent of a video packet. In image coding technology, above-described variable-length codes are used to improve the coding rate, but video packets are not of fixed-length. Therefore, the aforementioned synchronization words are used to maintain synchronization during transmission. By this means, video packet transmission can be implemented using variable-lengthcodes. Therefore, synchronization word detection is generally carried out to achieve resynchronization after the occurrence of an error.

Meanwhile, the operation of a decoder when a transmission error occurs is not stipulated in the standard, but is implementation-dependent. Generally speaking, when a transmission error occurs, the relevant video packet undergoes processing called concealment processing that makes the degradation of image quality less conspicuous, and processing involving a search for a synchronization word is carried out to find the start of the next video packet.

One example of a video packet configuration method used involves setting the number of bits per video packet at a particular level. An effect of using such a configuration is that a large number of macro blocks are contained in a video packet in an image area where a large quantity of code is not necessary, such as a background. Even if a video packet containing such an area is lost during transmission, processing to make the degradation comparatively inconspicuous can easily be performed on the receiving side, and therefore it is more effective to have many macro blocks contained in one video packet. On the other hand, in a part where motion is vigorous, or in an image area that includes fine texture, the result is that only a few macro blocks are contained in a video packet. If a video packet containing such a visually important area is lost during transmission, it is extremely difficult to perform processing to make the degradation inconspicuous on the receiving side, and it is therefore more effective to configure video packets with macro blocks so as to make as few areas as possible.

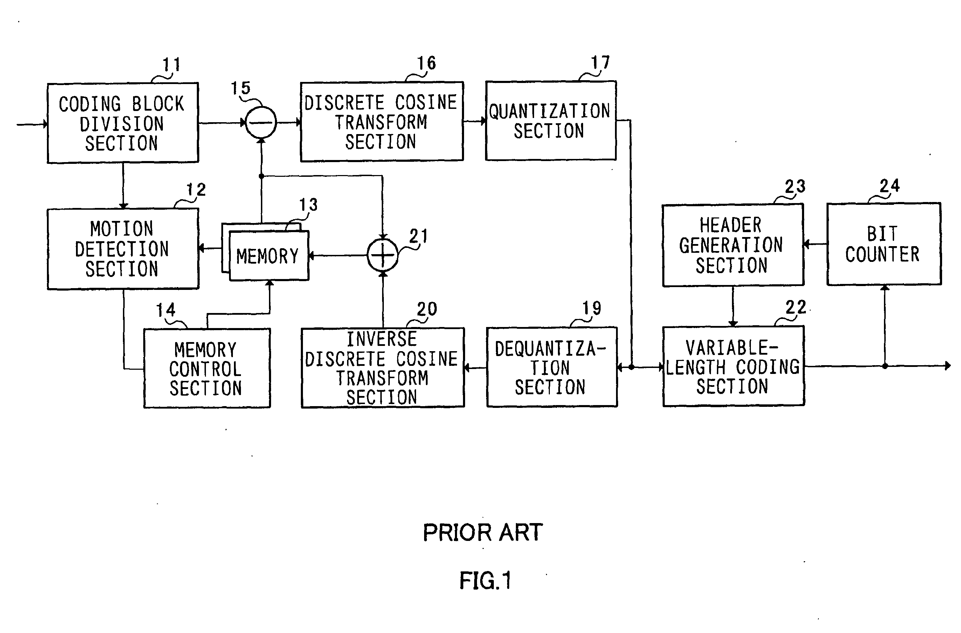

Conventional image coding processing will now be described using FIG.1. An input image is divided into coding units called macro blocks by a coding block division section 11. In a motion detection section 12, a macro block is compared with a previous picture input from frame memory 13, and the most closely resemblingpart is detected. Then the deviation between the location of the area in the previous picture most closely resembling the input macro block (predicted reference image) and the current macro block location is output as a motion vector.

A memory control section 14 calculates a readout address for the frame memory 13 so that the predicted reference image is output. The difference value between the macro block and the predicted reference image is calculated by a subtracter 15, and this difference value is converted to a coefficient value in the frequency domain (DCT coefficient value) by a discrete cosine transform section 16. Furthermore, the DCT coefficient value is quantized in a quantization section 17. The quantized DCT coefficient is input to a variable-length coding section 22, and is output after undergoing variable-length coding.

The quantized DCT coefficient is also restored to a DCT coefficient in a dequantization section 19, and is further restored to a difference value in an inverse discrete cosine transform section 20. The restored difference value is added to the predicted reference image by an adder 21, and a reproduction image identical to that on the decoding side is obtained and is used in the next coding processing.

Also, a bit counter 24 counts the number of bits of the coded variable-length code, and when the cumulative number of bits exceeds a certain threshold, the data up to that macro block is taken as one video packet, and before the next macro block variable-length code bit string is output, a synchronization word and necessary header information are generated by a header generation section 23 and added thereto.

As stated above, when performing video packet transmission of variable-length-coded image data, positioning of a synchronization word in image coding is extremely important. A synchronization word must comprise the same bit string in any combination whatever of various kinds of variable-length-coded image data. However, such combinations depend on the image data, and since various kinds of images, including natural images, computer graphic images, and composite images, are now used as input images, it is extremely difficult to verify all combinations. As a result, with certain specific combinations, there may be cases where a variable-length-coded bit string matches the synchronization word (pseudo-synchronization: emulation).

When such pseudo-synchronization occurs, a video packet boundary will be identified as having arrived on the receiving side even if image data is actually in the middle of being decoded, and the system may operate in the same way as when a transmission error occurs. This means that data that the transmitting side intended to send is subjected to incorrect restoration on the receiving side, which is an extremely serious problem in image communication.

There is a possibility of such a problem occurring in the variable-length coding section 22 in FIG.1. Depending on the range indicated by the motion vector, the synchronization word stipulated in MPEG-4 is a 17-bit bit string comprising 16 zeros followed by a 1. In binary notation, this is expressed as "0000 0000 0000 0000 1". With the intra-coding method, if a value of -255 is coded using the MPEG-4 variable-length code table when coding the DC component in a DCT coefficient, the resultant code will be "0000 0000". If coding of a certain specific AC component is then carried out, the resultant code will be "0000 0000 1110". Combining these two gives "0000 0000 0000 0000 1110", the first 17 bits of which are identical to the synchronization word.

### Disclosure of Invention

It is an object of the present invention to provide an image coding apparatus and image coding method that prevent the occurrence of pseudo-synchronization on the transmitting side, and ensure that the receiving side restores an image as intended by the transmitting side.

According to one embodiment of the present invention, an image coding apparatus codes an input image as a stream containing a synchronization word composed of a predetermined bit string, and comprises a synchronization word inclusion possibility detection section that determines, from the bit string constituting a stream before the aforementioned synchronization word is added or image information corresponding to the bit string, whether or not there is a possibility of inclusion of a bit string identical to the aforementioned synchronization word, and an image information modifying section that modifies the aforementioned image information to image information which has no possibility of inclusion of a bit string identical to the aforementioned synchronization word, based on the result of determination by the aforementioned synchronization word inclusion possibility detection section.

According to another embodiment of the present invention, an image coding apparatus codes an input image as a stream containing a synchronization word composed of a predetermined bit string, and comprises a synchronization word inclusion possibility detection section that determines, from the bit string constituting a stream before the aforementioned synchronization word is added or image information corresponding to the bit string, whether or not there is a possibility of inclusion of a bit string identical to the aforementioned synchronization word, and a bit string modifying section that modifies the aforementioned bit string to a bit string which has no possibility of inclusion of a bit string identical to the aforementioned synchronization word, based on the result of determination by the aforementioned synchronization word inclusion possibility detection section.

According to yet another embodiment of the present invention, an image coding method codes an input image as a stream containing a synchronization word composed of a predetermined bit string, and comprises a synchronization word inclusion possibility detection step of determining, from the bit string constituting a stream before the aforementioned synchronization word is added or image information corresponding to the bit string, whether or not there is a possibility of inclusion of a bit string identical to the aforementioned synchronization word, and an image information modifying step of modifying the aforementioned image information to image information which has no possibility of inclusion of a bit string identical to the aforementioned synchronization word, based on the result of determination in the aforementioned synchronization word inclusion possibility detection step.

According to yet another embodiment of the present invention, an image coding method codes an input image as a stream containing a synchronization word composed of a predetermined bit string, and comprises a synchronization word inclusion possibility detection step of determining, from the bit string constituting a stream before the aforementioned synchronization word is added or image information corresponding to the bit string, whether or not there is a possibility of inclusion of a bit string identical to the aforementioned synchronization word, and a bit string modifying step of modifying the aforementioned bit string to a bit string which has no possibility of inclusion of a bit string identical to the aforementioned synchronization word, based on the result of determination in the aforementioned synchronization word inclusion possibility detection step.

According to yet another embodiment of the present invention, an image coding program is for causing a computer to function as a synchronization word inclusion possibility detection section that determines, from the bit string constituting a stream before the aforementioned synchronization word is added or image information corresponding to the bit string, whether or not there is a possibility of inclusion of a bit string identical to the aforementioned synchronization word, and an image information modification section that modifies the aforementioned image information to image information which has no possibility of inclusion of a bit string identical to the aforementioned synchronization word, based on the result of determination by the aforementioned synchronization word inclusion possibility detection section.

According to yet another embodiment of the present invention, an image coding program is for causing a computer to function as a synchronization word inclusion possibility detection section that determines, from the bit string constituting a stream before the aforementioned synchronization word is added or image information corresponding to the bit string, whether or not there is a possibility of inclusion of a bit string identical to the aforementioned synchronization word, and a bit string modification section that modifies the aforementioned bit string to a bit string which has no possibility of inclusion of a bit string identical to the aforementioned synchronization word, based on the result of determination by the aforementioned synchronization word inclusion possibility detection section.

### Brief Description of Drawings

FIG.1 is a block diagram showing the configuration of a conventional image coding apparatus;
FIG.2 is a block diagram showing the configuration of a radio communication apparatus equipped with an image coding apparatus according to Embodiments 1 through 4 of the present invention;
FIG.3 is a block diagram showing the configuration of an image coding apparatus according to Embodiment 1 of the present invention;
FIG.4A is a drawing for explaining an example of image coding in an image coding apparatus according to Embodiment 1 of the present invention;
FIG.4B is a drawing for explaining another example of image coding in an image coding apparatus according to Embodiment 1 of the present invention;
FIG.5 is a block diagram showing the configuration of an image coding apparatus according to Embodiment 2 of the present invention;
FIG.6 is a block diagram showing the configuration of an image coding apparatus according to Embodiment 3 of the present invention; and
FIG.7 is a block diagram showing the configuration of an image coding apparatus according to Embodiment 4 of the present invention.

### Best Mode for Carrying out the Invention

The essential features of the present invention are that, in image coding that performs coding as a stream containing a synchronization word composed of a predetermined bit string, the possibility is detected of a word identical to the aforementioned synchronization word being included in a stream before the aforementioned synchronization word is added, and when such a possibility is detected, image information or a bit string is modified, thereby preventing synchronization word emulation, and ensuring that the receiving side restores an image as intended by the transmitting side.

With reference now to the accompanying drawings, embodiments of the present invention will be explained in detail below.

### (Embodiment 1)

In this embodiment, a case is described in which the possibility of inclusion of a synchronization word is detected, and when such a possibility is detected, image information is modified.

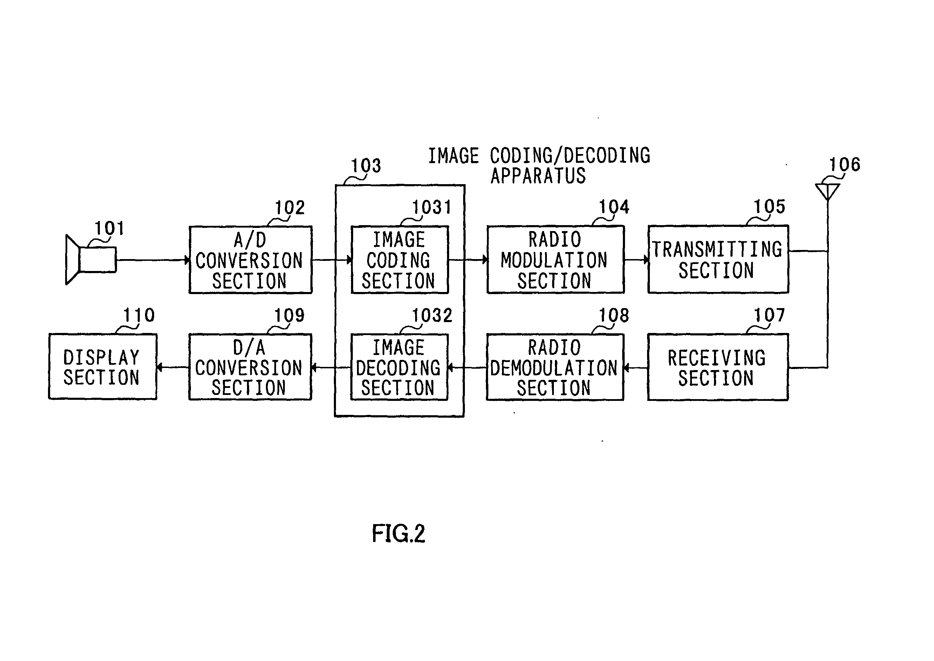

FIG.2 is a block diagram showing the configuration of a radio communication apparatus equipped with an image coding apparatus according to Embodiments 1 through 4 of the present invention.

In this radio communication apparatus, on the transmitting side, an image is picked up by an image pickup section 101 such as a camera, and the picked-up image signal is output to an A/D conversion section 102. The image signal is converted to a digital signal by the A/D conversion section 102, and this digital signal is output. to an image coding section 1031 of an image coding/decoding apparatus 103. The image coding section 1031 performs image coding processing on the digital signal, and outputs coded image information to a radio modulation section 104. The radio modulation section 104 performs digital modulation of the coded image information, and outputs the resulting information to a transmitting section 105. The transmitting section 105 executes predetermined radio transmission processing on the modulated signal. This signal is transmitted via an antenna 106.

Meanwhile, on the receiving side of the radio communication apparatus, a reception signal received by the antenna 106 undergoes predetermined radio reception processing by a receiving section 107, and is output to a radio demodulation section 108. The radio demodulation section 108 performs demodulation processing on the received signal, and outputs a demodulated signal to an image decoding section 1032 of the image coding/decoding apparatus 103. The image decoding section 1032 performs demodulation processing on the demodulated signal and obtains a digital signal, and outputs this digital signal to a D/A conversion section 109. The D/A conversion section 109 converts the digital signal output from the image decoding section 1032 to an analog signal, and outputs this analog signal to a display or similar display section 110.

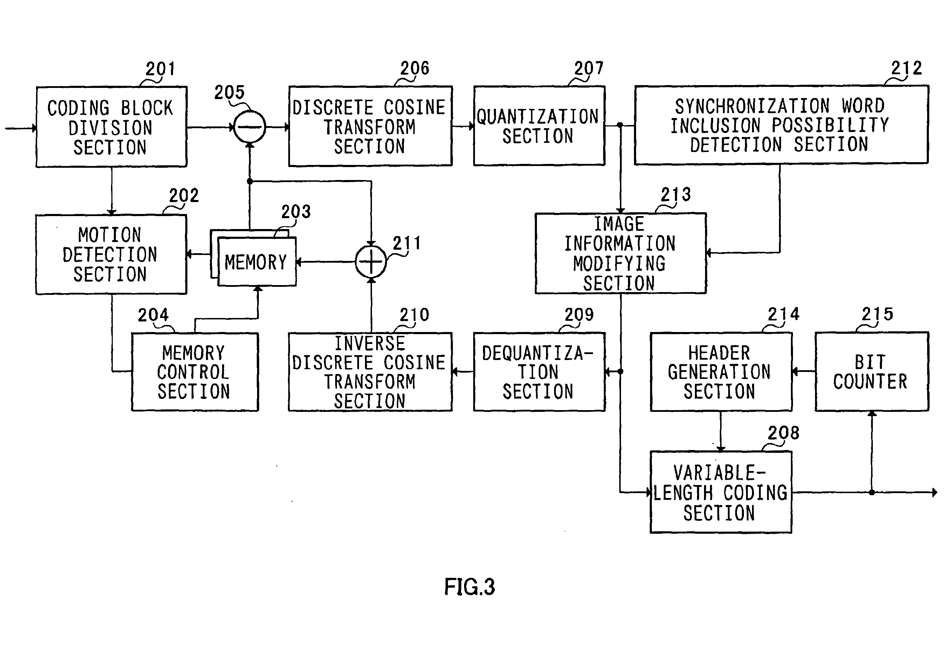

FIG.3 is a block diagram showing the configuration of an image coding apparatus according to Embodiment 1 of the present invention.

An input image is divided into coding units called macro blocks by a coding block division section 201. A macro block resulting from division by the coding block division section 201 is output to a motion detection section 202, and is also output to a subtraction section 205.

In the motion detection section 202, a macro block is compared with a previous picture input from frame memory 203, and the most closely resembling part is detected. Then the deviation between the location of the area in the previous picture most closely resembling the input macro block (predicted reference image) and the current macro block location is taken as a motion vector, and this motion vector is output to a memory control section 204.

The memory control section 204 calculates a readout address for the frame memory 203 so that the predicted reference image is output. Then the memory control section 204 outputs the predicted reference image corresponding to the readout address from the frame memory 203 to the subtraction section 205.

The subtraction section 205 calculates a difference value between the macro block and the predicted reference image, and outputs this difference value to a discrete cosine transform section 206. The discrete cosine transform section 206 converts the difference value to a coefficient value in. the frequency domain (DCT coefficient value). By this means, transform coding processing is performed on an input image on a multiple-pixel unit basis. This DCT coefficient value is output to a quantization section 207. The quantization section 207 quantizes the DCT coefficient value, and outputs the quantized DCT coefficient to a synchronization word inclusion possibility detection section 212 and also to an image information modifying section 213.

The synchronization word inclusion possibility detection section 212 determines whether or not the quantized DCT coefficient may form a bit string that is a synchronization word, and if that possibility is detected, outputs a control signal to the image information modifying section 213. On receiving the control signal, the image information modifying section 213 modifies the image information (quantized DCT coefficient). Details of image information modification will be given later herein. The modified image information is output to a variable-length coding section 208, and is also output to a dequantization section 209. When a possibility of synchronization word inclusion is not detected, the quantized DCT coefficient is output to the variable-length coding section 208, and is also output to the dequantization section 209.

The variable-length coding section 208 performs variable-length coding processing on the quantized DCT coefficient. A variable-length-coded variable-length code is output to a bit counter 215. The bit counter 215 counts the number of bits of the coded variable-length code, and when the cumulative number of bits exceeds a certain threshold, the data up to that macro block is taken as one video packet. Before outputting the next macro block variable-length code bit string, the variable-length coding section 208 also adds a synchronization word and necessary header information generated by a header generation section 214.

Meanwhile, a quantized DCT coefficient or modified quantized DCT coefficient is restored to a DCT coefficient in the dequantization section 19, and that DCT coefficient is output to an inverse discrete cosine transform section 210. The inverse discrete cosine transform section 210 executes inverse discrete cosine transform processing on the DCT coefficient, restoring it to a difference value. The restored difference value is output to an adding section 211. In the adding section 211, the restored difference value is added to the predicted reference image, and a reproduction image identical to that on the coding side is obtained, is stored in the frame memory 203, and is used in the next coding processing.

A case will now be described in which image coding according to the present invention is performed by an image coding apparatus that has the above-described configuration.

After the difference between an input image and the previous picture has been obtained, this difference undergoes discrete cosine transform processing and is quantized. The quantized DCT coefficient is input to the synchronization word inclusion possibility detection section 212. The synchronization word inclusion possibility detection section 212 determines, from the quantized DCT coefficient, whether or not there is a possibility of a match with the synchronization word according to the bit string of the variable-length code coded next. As an example, a case may be considered in which all the bits in a variable-length code comprise 8 or more zero-bits, for instance.

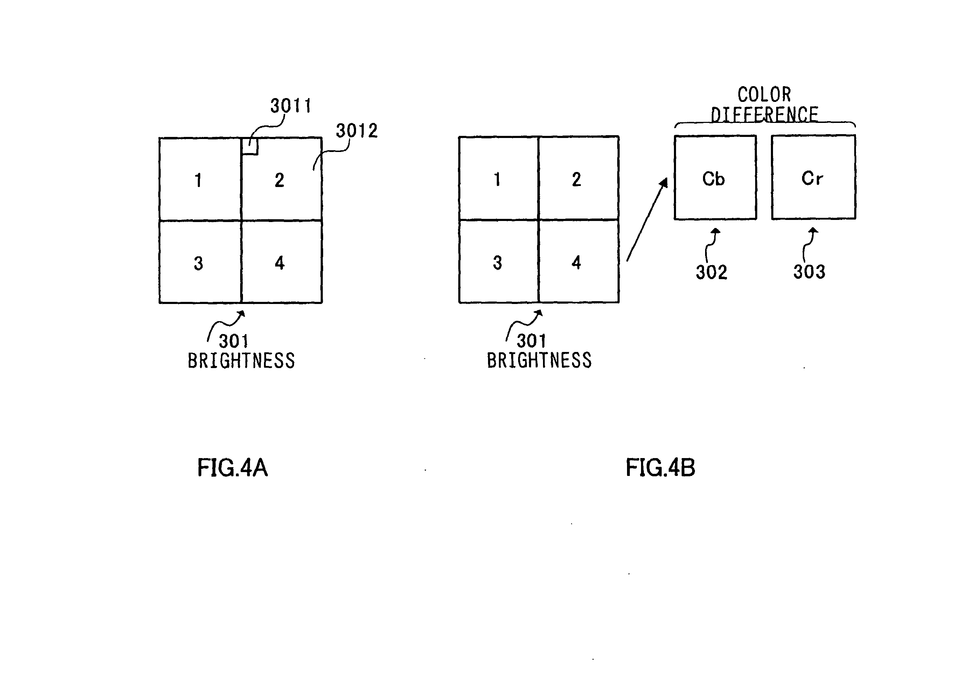

For example, in the case shown in FIG.4A, the DC component 3011 of the second macro block (the area indicated by "2" in FIG.4A) of brightness information 301 is DC = -255, which is "0000 0000" in binary notation. Then, if AC = 21 in a following AC component, expressed as a bit string this is "0000 0000 1110". In this case, if the AC component bit string follows the DC component bit string, the bit string will be "0000 0000 0000 0000 1110", which includes synchronization word "0000 0000 0000 0000 1". That is to say, this bit string includes a discrete cosine transform processed DC component and AC component (discrete cosine transform component).

Also, as shown in FIG.4B, brightness information 301 is followed by color difference information (Cb) 302 and color difference information (Cr) 303. If there is no AC component ("0000 0000") in the fourth macro block (the area indicated by "4" in FIG.4B) of brightness information 301, when the DC component of color difference information (Cb) 302 is DC = -255 ("0000 0000 1"), as described above, synchronization word "0000 0000 0000 0000 1" will be included. That is to say, this bit string includes a different color component (discrete cosine transform component) in a color signal.

The synchronization word inclusion possibility detection section 212 detects the possibility of occurrence of the above kind of case. This detection is carried out by detecting whether there are eight "0" bits in succession. As eight consecutive "0" bits present a high possibility of a synchronization word being formed, as explained above, a succession of eight "0" bits is detected to prevent a match with the synchronization word. Therefore, since it is sufficient to be able to detect eight consecutive "0" bits, a DC component of DC = -255 may be detected, or a bit string of eight "0" bits may be detected. In the case of detecting a DC component of DC = -255, a table or the like to show that DC = -255 corresponds to a bit string of eight "0" bits is used, and detection is performed by referring to that table.

When the possibility of a synchronization word being included in a quantized DCT coefficient is detected, this fact is reported to the image information modifying section 213 by means of a control signal. The image information modifying section 213 rewrites the value of the quantized DCT coefficient as a different value which has no possibility of inclusion of a synchronization word (a value less than or equal to a predetermined maximum value or greater than or equal to a predetermined minimum value). Such rewriting gives a value that will not form a synchronization word, and enables emulation to be prevented.

For example, 1 could be added to the value of a DCT coefficient. Specifically, DC = -255 could be rewritten as DC = -254. Here, a case has been described where 1 is added, but there are no particular limitations as long as the rewritten value is one which has no possibility of inclusion of a synchronization word. However, since it is possible that changing to a value which is far away from the original value may involve degradation of image quality, it is desirable to change to a value as close as possible to the original value.

The rewritten DCT coefficient value undergoes variable-length coding by the variable-length coding section 208, and a local decoded image is generated. Variable-length coding is performed using the same method as in normal variable-length coding processing. The rewritten DCT coefficient value is also sent to the dequantization section 209, and undergoes dequantization and inverse discrete cosine transform processing, to become a difference value. The difference value is then added to the predicted reference image, becoming a reproduction image identical to that on the decoding side, and this reproduction image is stored in the frame memory 203.

When inclusion of a synchronization word is not detected, the quantized DCT coefficient is subjected to variable-length coding in the normal way, and also undergoes dequantization and inverse discrete cosine transform processing, to become a difference value. The difference value is then added to the predicted reference image, becoming a reproduction image identical to that on the decoding side, and this reproduction image is stored in the frame memory 203.

Thus, detection of whether or not there is a possibility of inclusion of a synchronization word is performed, and when such a possibility is detected, the image data (DCT coefficient) is modified, as a result of which mismatches between the coding side and decoding side do not occur, synchronization word emulation can be prevented, and it is possible to ensure that the receiving side restores an image as intended by the transmitting side.

In this embodiment, a case has been described in which a control signal is output to an image information modifying section when a possibility of inclusion of a synchronization word is detected, but a variation is also possible whereby, when a possibility of inclusion of a synchronization word is detected, a control signal indicating that such a possibility has been detected is output to an image information modifying section, and when a possibility of inclusion of a synchronization word is not detected, a control signal indicating that such a possibility has not been detected is output to the image information modifying section.

According to this embodiment, image information is modified when there is a possibility of inclusion of a synchronization word, so that, although there is a possibility of image information being modified even when there is not a perfect match with a synchronization word, an effect of processing being simplified is obtained.

### (Embodiment 2)

In this embodiment, a case is described in which the possibility of inclusion of a synchronization word is detected, and when such a possibility is detected, a bit string that has undergone variable-length coding and image data corresponding thereto are modified.

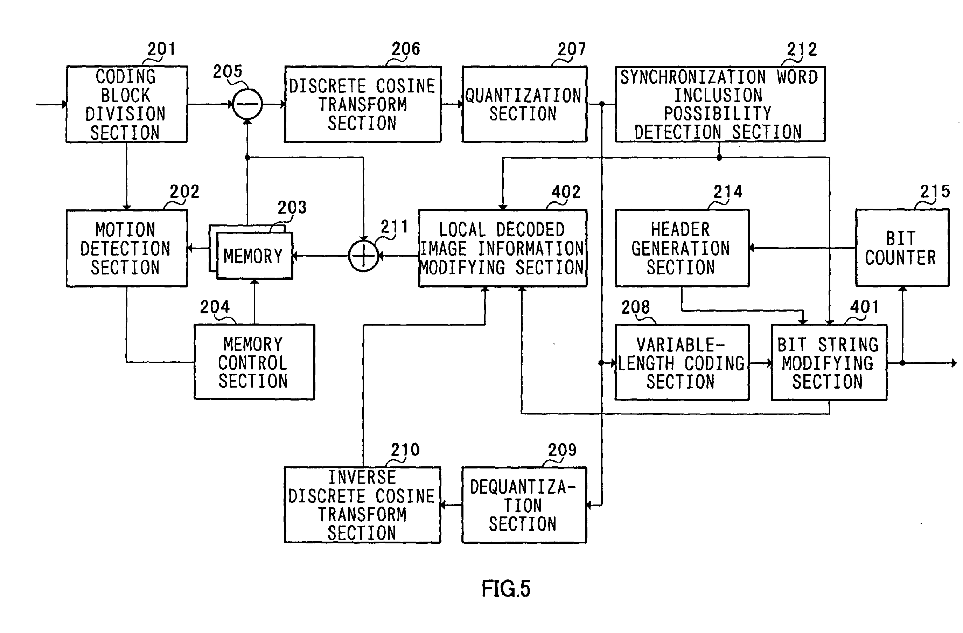

FIG.5 is a block diagram showing the configuration of an image coding apparatus according to Embodiment 2 of the present invention. Parts in FIG.5 identical to those in FIG.3 are assigned the same numerals as in FIG.3 and their detailed explanations are omitted.

The image coding apparatus shown in FIG.5 comprises, instead of an image information modifying section 213, a bit string modifying section 401 that modifies a bit string that has undergone variable-length coding if a possibility of inclusion of a synchronization word is detected, and a local decoded image data modifying section 402 that modifies local decoded image data in accordance with the modified bit string.

In the image coding apparatus shown in FIG.5, a quantized DCT coefficient is output to a synchronization word inclusion possibility detection section 212, variable-length coding section 208, and dequantization section 209. On detecting a possibility of inclusion of a synchronization word, the synchronization word inclusion possibility detection section 212 outputs a control signal to that effect to the bit string modifying section 401 and the local decoded image data modifying section 402. The process of detection by the synchronization word inclusion possibility detection section 212 is the same as in Embodiment 1.

The variable-length coding section 208 performs variable-length coding of a quantized DCT coefficient and generates a local decoded image. Variable-length coding is performed using the same method as in normal variable-length coding processing. The DCT coefficient subjected to variable-length coding in this way becomes a bit string. The variable-length-coded local decoded image is output to the bit string modifying section 401, where the bit string is modified. That is to say, on receiving a control signal indicating that a possibility of inclusion of a synchronization word has been detected, the bit string modifying section 401 rewrites the local decoded image as a bit string which does not include a synchronization word. The rewritten local decoded image is output to the local decoded image data modifying section 402.

Meanwhile, the quantized DCT coefficient undergoes dequantization and inverse discrete cosine transform processing, to become a difference value. The difference value is then output to the local decoded image data modifying section 402. The local decoded image data modifying section 402 rewrites image data (difference value after inverse discrete cosine transform processing) as a value corresponding to the modified bit string. By this means, it is possible to reflect the bit string modification in the local decoded image.

For example, if the bit string modifying section 401 rewrites bit string "0000 0000" as a different bit string "0000 0001", the local decoded image data modifying section 402 changes the image data to the pixel value corresponding to bit string "0000 0001".

The image data (difference value) modified in this way is output to an adding section 211, and is added to the predicted reference image to become a reproduction image identical to that on the decoding side, and this reproduction image is stored in the frame memory 203.

Thus, detection of whether or not there is a possibility of inclusion of a synchronization word is performed, and when such a possibility is detected, the variable-length-coded bit string is modified, as a result of which mismatches between the coding side and decoding side do not occur, synchronization word emulation can be prevented, and it is possible to ensure that the receiving side restores an image as intended by the transmitting side.

In this embodiment, a case has been described in which a control signal is output to a bit string modifying section and local decoded image data modifying section when a possibility of inclusion of a synchronization word is detected, but a variation is also possible whereby, when a possibility of inclusion of a synchronization word is detected, a control signal indicating that such a possibility has been detected is output to a bit string modifying section and local decoded image data modifying section, and when a possibility of inclusion of a synchronization word is not detected, a control signal indicating that such a possibility has not been detected is output to the bit string modifying section and local decoded image data modifying section.

Also, in this embodiment, a case has been described in which a bit string is modified after detecting a possibility of inclusion of a synchronization word, but it is also possible for a bit string to be modified after detecting the bit string of the synchronization word itself.

According to this embodiment, image information is modified when there is a possibility of inclusion of a synchronization word, so that, although there is a possibility of image information being modified even when there is not a perfect match with a synchronization word, an effect of processing being simplified is obtained.

### (Embodiment 3)

In this embodiment, a case is described in which, when there is a possibility of a synchronization word being composed by a first bit string and a second bit string, the possibility of a synchronization word being included is detected in the first bit string, and when such a possibility is detected, image information corresponding to the second bit string is modified.

As described in Embodiment 1 above, when a synchronization word is included, the synchronization word is composed of a combination of two bit strings. In above-described Embodiments 1 and 2, the possibility of inclusion of a synchronization word is detected in the first of the two bit strings (the first bit string) , and when such a possibility is detected, image information corresponding to the first bit string is modified, or the first bit string itself is modified, but in this embodiment and Embodiment 4 hereinafter, the possibility of inclusion of a synchronization word is detected in the first bit string, and when such a possibility is detected, image information corresponding to the second bit string is modified, or the second bit string is modified.

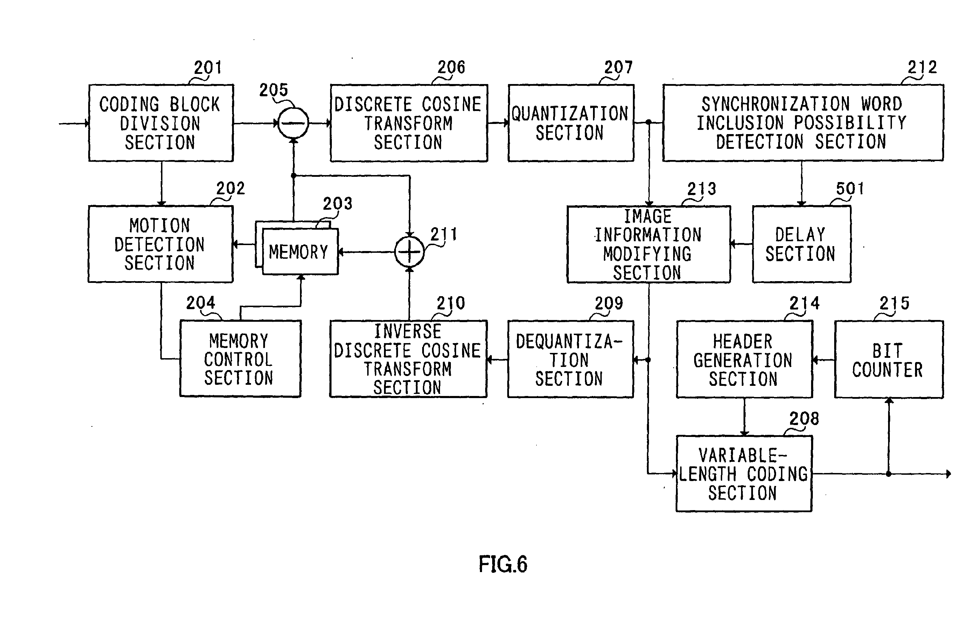

FIG.6 is a block diagram showing the configuration of an image coding apparatus according to Embodiment 3 of the present invention. Parts in FIG.6 identical to those in FIG.3 are assigned the same numerals as in FIG.3 and their detailed explanations are omitted.

The image coding apparatus shown in FIG.6 comprises a delay section 501 that delays the result of detection of the possibility of inclusion of a synchronization word. When a possibility of inclusion of a synchronization word is detected using a first bit string, this delay section 501 delays the output timing of a control signal indicating that such a possibility was detected, and outputs this control signal to an image information modifying section 213 at the timing at which a second bit string is processed.

In the image coding apparatus shown in FIG.6, a synchronization word inclusion possibility detection section 212 detects the possibility of inclusion of a synchronization word from a quantized DCT coefficient. This detection process is the same as in Embodiment 1.

When, for example, as shown in FIG.4A, the first bit string is DC component 3011 DC = -255 (bit string "0000 0000"), and the second bit string is AC component AC = 21 (bit string "0000 0000 1110"), then when a possibility of inclusion of a synchronization word is detected in the first bit string (quantized DCT coefficient), a control signal is delayed by the delay section 501 and output to the image information modifying section 213 at the timing at which the second bit string is processed. The image information modifying section 213 rewrites the value of the second bit string as a different value which has no possibility of inclusion of a synchronization word.

Specifically, when DC = -255 is detected in the first bit string, the DCT coefficient value of 21 is rewritten as 20 or 19. Here, a case has been described in which a DCT coefficient value of 21 is rewritten as 20 or 19, but there are no particular restrictions on the rewrite value as long as it is a value that does not form a synchronization word in combination with the first bit string. For example, if there is a possibility of the first bit string including a bit string identical to the synchronization word, the AC component after discrete cosine transform processing may be made all 0s. As a result of making such a modification, the value becomes one that will not form a synchronization word, and emulation can be prevented.

The rewritten second bit string (DCT coefficient value) undergoes variable-length coding by a variable-length coding section 208, and a local decoded image is generated. Variable-length coding is performed using the same method as in normal variable-length coding processing. The rewritten DCT coefficient value is also sent to a dequantization section 209, and undergoes dequantization and inverse discrete cosine transform processing, to become a difference value. The difference value is then added to the predicted reference image, becoming a reproduction image identical to that on the decoding side, and this reproduction image is stored in frame memory 203.

When inclusion of a synchronization word is not detected, the quantized DCT coefficient is subjected to variable-length coding in the normal way, and also undergoes dequantization and inverse discrete cosine transform processing, to become a difference value. The difference value is then added to the predicted reference image, becoming a reproduction image identical to that on the decoding side, and this reproduction image is stored in the frame memory 203.

Thus, detection of whether or not there is a possibility of inclusion of a synchronization word is performed using a first bit string, and when such a possibility is detected, the image information (DCT coefficient) of a second bit string is modified, as a result of which mismatches between the coding side and decoding side do not occur, synchronization word emulation can be prevented, and it is possible to ensure that the receiving side restores an image as intended by the transmitting side.

In this embodiment, a case has been described in which a control signal is output to an image information modifying section when a possibility of inclusion of a synchronization word is detected, but a variation is also possible whereby, when a possibility of inclusion of a synchronization word is detected, a control signal indicating that such a possibility has been detected is output to an image information modifying section, and when a possibility of inclusion of a synchronization word is not detected, a control signal indicating that such a possibility has not been detected is output to the image information modifying section.

According to this embodiment, image information modification processing is performed in the event of a match with a synchronization word, so that, although the amount of processing is somewhat greater than in Embodiment 1 and Embodiment 2, image information modifications that are to no purpose are no longer performed.

### (Embodiment 4)

In this embodiment, a case is described in which the possibility of a synchronization word being included is detected using a first bit string, and when such a possibility is detected, a second bit string that has undergone variable-length coding and image data corresponding thereto are modified.

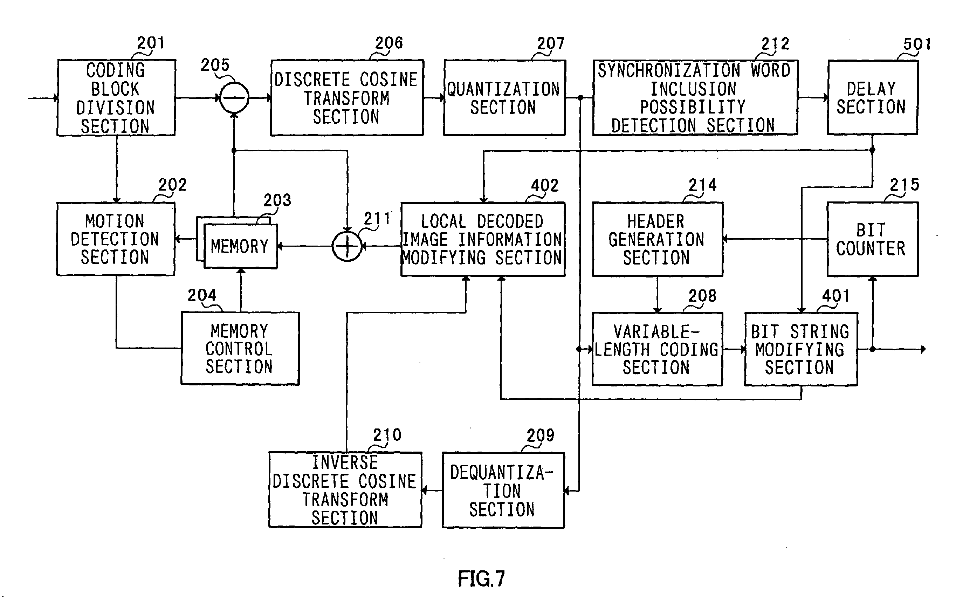

FIG.7 is a block diagram showing the configuration of an image coding apparatus according to Embodiment 4 of the present invention. Parts in FIG.7 identical to those in FIG.6 are assigned the same numerals as in FIG.6 and their detailed explanations are omitted.

The image coding apparatus shown in FIG. 7 comprises, instead of an image information modifying section 213, a bit string modifying section 401 that modifies a bit string that has undergone variable-length coding if a possibility of inclusion of a synchronization word is detected, and a local decoded image data modifying section 402 that modifies local decoded image data in accordance with the modified bit string. In addition, the image coding apparatus shown in FIG.7 comprises a delay section 501 that delays the result of detection of the possibility of inclusion of a synchronization word. When a possibility of inclusion of a synchronization word is detected using a first bit string, this delay section 501 delays the output timing of a control signal indicating that such a possibility was detected, and outputs this control signal to the local decoded image data modifying section 402 at the timing at which a second bit string is processed.

In the image coding apparatus shown in FIG.7, a quantized DCT coefficient is output to a synchronization word inclusion possibility detection section 212, variable-length coding section 208, and dequantization section 209. When the synchronization word inclusion possibility detection section 212 detects a possibility of inclusion of a synchronization word using a first bit string, the output timing of a signal indicating that this possibility has been detected is delayed, and is output to the bit string modifying section 401 and local decoded image data modifying section 402 at the timing for processing a second bit string. The process of detection by the synchronization word inclusion possibility detection section 212 is the same as in Embodiment 1.

The variable-length coding section 208 performs variable-length coding of a quantized DCT coefficient (first bit string and second bit string) and generates a local decoded image. Variable-length coding is performed using the same method as in normal variable-length coding processing. The variable-length-coded local decoded image is output to the bit string modifying section 401, where the second bit string is modified. That is to say, on receiving a control signal indicating that a possibility of inclusion of a synchronization word has been detected for the first bit string, the bit string modifying section 401 rewrites the local decoded image for the second bit string as a bit string which does not include a synchronization word. The rewritten local decoded image is output to the local decoded image data modifying section 402.

Meanwhile, the quantized DCT coefficient undergoes dequantization and inverse discrete cosine transform processing, to become a difference value. The difference value is then output to the local decoded image data modifying section 402. The local decoded image data modifying section 402 rewrites image data (difference value after inverse discrete cosine transform processing) as a value corresponding to the modified bit string.

When, for example, as shown in FIG.4A, the first bit string is DC component 3011 DC = -255 (bit string "0000 0000"), and the second bit string is AC component AC = 21 (bit string "0000 0000 1110"), then when a possibility of inclusion of a synchronization word is detected in the first bit string (quantized DCT coefficient), the bit string modifying section 401 rewrites the second bit string as a different bit string which has no possibility of inclusion of a synchronization word.

The image data (difference value) modified in this way is output to an adding section 211, and is added to the predicted reference image to become a reproduction image identical to that on the decoding side, and this reproduction image is stored in frame memory 203.

Thus, detection of whether or not there is a possibility of inclusion of a synchronization word is performed for a first bit string, and when such a possibility is detected, a variable-length-coded second bit string is modified, as a result of which mismatches between the coding side and decoding side do not occur, synchronization word emulation can be prevented, and it is possible to ensure that the receiving side restores an image as intended by the transmitting side.

In this embodiment, a case has been described in which a control signal is output to a bit string modifying section and local decoded image data modifying section when a possibility of inclusion of a synchronization word is detected, but a variation is also possible whereby, when a possibility of inclusion of a synchronization word is detected, a control signal indicating that such a possibility has been detected is output to a bit string modifying section and local decoded image data modifying section, and when a possibility of inclusion of a synchronization word is not detected, a control signal indicating that such a possibility has not been detected is output to the bit string modifying section and local decoded image data modifying section.

According to this embodiment, image information modification processing is performed in the event of a match with a synchronization word, so that, although the amount of processing is somewhat greater than in Embodiment 1 and Embodiment 2, image information modifications that are to no purpose are no longer performed.

An image coding apparatus according to above-described Embodiments 1 through 4 may also be configured as an image coding/decoding apparatus, and may also be installed in a radio communication apparatus such as a radio base station or communication terminal.

The present invention is not limited to above-described Embodiments 1 through 4, and various variations and modifications may be possible without departing from the scope of the present invention. For example, in above-described Embodiments 1 through 4 the descriptions have referred to hardware such as an image coding apparatus, but it is also possible for the present invention to be implemented by means of software. That is to say, it is possible to implement a method according to the present invention (a method whereby a possibility of inclusion of a synchronization word is detected, and when such a possibility is detected, image information or a bit string (image data) is modified) as a program and store this program in a writable recording medium such as ROM, and to execute this stored program by means of a CPU. Moreover, it is also possible for the present invention to be implemented by a computer by reading out this software from a storage medium. Furthermore, by incorporating the functions described in Embodiments 1 through 4 above into an image distribution server, it is possible to implement image distribution that does not cause synchronization word emulation.

As described above, according to the present invention, in image coding that performs coding as a stream containing a synchronization word composed of a predetermined bit string, the possibility of the synchronization word being included is detected, and when such a possibility is detected, image information or a bit string is modified, thereby preventing synchronization word emulation, and ensuring that the receiving side restores an image as intended by the transmitting side.

This application is based on Japanese Patent Application No.2001-241283 filed on August 8, 2001, entire contents of which are expressly incorporated by reference herein.

### Industrial Applicability

The present invention is applicable to an image coding apparatus installed in a radio communication apparatus used in a mobile communication system.

## Claims

1. An image coding apparatus that codes an input image as a stream containing a synchronization word composed of a predetermined bit string, said image coding apparatus comprising:
a synchronization word inclusion possibility detection section that determines, from a bit string constituting a stream before said synchronization word is added or image information corresponding to said bit string, whether or not there is a possibility of inclusion of a bit string identical to said synchronization word; and
an image information modifying section that modifies said image information to image information which has no possibility of inclusion of a bit string identical to said synchronization word, based on a result of determination by said synchronization word inclusion possibility detection section.

2. An image coding apparatus that codes an input image as a stream containing a synchronization word composed of a predetermined bit string, said image coding apparatus comprising:
a synchronization word inclusion possibility detection section that determines, from a bit string constituting a stream before said synchronization word is added or image information corresponding to said bit string, whether or not there is a possibility of inclusion of a bit string identical to said synchronization word; and
a bit string modifying section that modifies said bit string to a bit string which has no possibility of inclusion of a bit string identical to said synchronization word, based on a result of determination by said synchronization word inclusion possibility detection section.

3. The image coding apparatus according to claim 2, further comprising a local decoded image data modifying section that modifies local decoded image data corresponding to a bit string modified by said bit string modifying section.

4. The image coding apparatus according to claim 1, wherein:
a bit string constituting a stream includes a first bit string and a second bit string following said first bit string;
said local decoded image data modifying section performs determination on image information corresponding to said first bit string; and
said image information modifying section performs modification on image information corresponding to said second bit string.

5. The image coding apparatus according to claim 4, wherein, when there is a possibility of a first bit string including a bit string identical to a synchronization word, image information corresponding to a second bit string is made a value less than or equal to a predetermined maximum value or greater than or equal to a predetermined minimum value.

6. The image coding apparatus according to claim 2, wherein:
a bit string constituting a stream includes a first bit string and a second bit string following said first bit string;
said synchronization word inclusion possibility detection section performs determination on said first bit string; and
said bit string modifying section performs modification on said second bit string.

7. The image coding apparatus according to claim 1, further comprising a transform coding section that performs transform coding processing on an input image in multiple-pixel units.

8. The image coding apparatus according to claim 7, wherein:
said transform coding processing is discrete cosine transform processing; and
a bit string includes a DC component and AC component subjected to said discrete cosine transform processing.

9. The image coding apparatus according to claim 7, wherein:
said transform coding processing is discrete cosine transform processing; and
a bit string includes different color components within a color signal.

10. The image coding apparatus according to claim 8, wherein, when there is a possibility of a first bit string including a bit string identical to a synchronization word, an AC component subjected to discrete cosine transform processing is made all 0s.

11. The image coding apparatus according to claim 2, further comprising a transform coding section that performs transform coding processing on an input image in multiple-pixel units.

12. The image coding apparatus according to claim 11, wherein:
said transform coding processing is discrete cosine transform processing; and
a bit string includes a DC component and AC component subjected to said discrete cosine transform processing.

13. The image coding apparatus according to claim 11, wherein:
said transform coding processing is discrete cosine transform processing; and
a bit string includes different color components within a color signal.

14. The image coding apparatus according to claim 12, wherein, when there is a possibility of a first bit string including a bit string identical to a synchronization word, an AC component subjected to discrete cosine transform processing is made all 0s.

15. An image coding method for coding an input image as a stream containing a synchronization word composed of a predetermined bit string, said image coding method comprising:
a synchronization word inclusion possibility detection step of determining, from a bit string constituting a stream before said synchronization word is added or image information corresponding to said bit string, whether or not there is a possibility of inclusion of a bit string identical to said synchronization word; and
an image information modifying step of modifying said image information to image information which has no possibility of inclusion of a bit string identical to said synchronization word, based on a result of determination in said synchronization word inclusion possibility detection step.

16. An image coding method for coding an input image as a stream containing a synchronization word composed of a predetermined bit string, said image coding apparatus comprising:
a synchronization word inclusion possibility detection step of determining, from a bit string constituting a stream before said synchronization word is added or image information corresponding to said bit string, whether or not there is a possibility of inclusion of a bit string identical to said synchronization word; and
a bit string modifying step of modifying said bit string to a bit string which has no possibility of inclusion of a bit string identical to said synchronization word, based on a result of determination in said synchronization word inclusion possibility detection step.

17. An image coding program that causes a computer to function as:
a synchronization word inclusion possibility detection section that determines, from a bit string constituting a stream containing a synchronization word composed of a predetermined bit string or image information corresponding to said bit string, whether or not there is a possibility of inclusion of a bit string identical to said synchronization word; and
an image information modifying section that modifies said image information to image information which has no possibility of inclusion of a bit string identical to said synchronization word, based on a result of determination by said synchronization word inclusion possibility detection section.

18. An image coding program that causes a computer to function as:
a synchronization word inclusion possibility detection section that determines, from a bit string constituting a stream containing a synchronization word composed of a predetermined bit string or image information corresponding to said bit string; whether or not there is a possibility of inclusion of a bit string identical to said synchronization word; and
a bit string modifying section that modifies said bit string to a bit string which has no possibility of inclusion of a bit string identical to said synchronization word, based on a result of determination by said synchronization word inclusion possibility detection section.
